Europäisches Patentamt

European Patent Office

Office européen des brevets

(19)

(11) Numéro de publication: **0 096 600**
**B1**

(12) **FASCICULE DE BREVET EUROPEEN**

(45) Date de publication du fascicule du brevet:
**19.03.86**

(51) Int. Cl.⁴: **H 04 N 9/09**

(21) Numéro de dépôt: **83400895.5**

(22) Date de dépôt: **03.05.83**

(54) Mire optique pour la correction des défauts de convergence d'une caméra couleurs.

(30) Priorité: **14.05.82 FR 8208486**

(43) Date de publication de la demande:
**21.12.83 Bulletin 83/51**

(45) Mention de la délivrance du brevet:
**19.03.86 Bulletin 86/12**

(84) Etats contractants désignés:
**DE GB NL**

(56) Documents cités:
**WO - A - 79/00717**
**FR - A - 2 454 238**

(73) Titulaire: **THOMSON-CSF, 173, Boulevard Haussmann,
F-75379 Paris Cedex 08 (FR)**

(72) Inventeur: **Desmons, Gérard, THOMSON-CSF
SCPI 173, bld Haussmann, F-75379 Paris Cedex 08 (FR)**
Inventeur: **Marchand, Gilles, THOMSON-CSF
SCPI 173, bld Haussmann, F-75379 Paris Cedex 08 (FR)**

(74) Mandataire: **Turlèque, Clotilde et al, THOMSON-CSF
SCPI 19, avenue de Messine, F-75008 Paris (FR)**

LIBER, STOCKHOLM 1986

## Description

La présente invention concerne une mire optique pour la correction des défauts de convergence d'une caméra couleurs.

Ces défauts de convergence résultent d'une superposition imparfaite des points d'impact sur l'écran de la caméra des faisceaux d'électrons correspondant aux trois couleurs fondamentales.

Dans la demande de brevet français n° 2.498.858 déposée le 23 Janvier 1981 au nom de la demanderesse, on a proposé un dispositif de reglage automatique de ces défauts de convergence. Ce dispositif comporte essentiellement une mémoire de correction destinée à mémoriser des valeurs prédéterminées de signaux de correction de balayage horizontal et vertical associées à chacun des LN rectangles résultant d'un quadrillage de l'écran de la caméra en L groupes de M lignes chacun et en N colonnes, et un séquenceur pour commander l'application de ces signaux de correction aux moyens de balayage de l'écran de la caméra lors du passage des moyens de balayage par les rectangles correspondants de l'écran.

Il est connu, par la demande de brevet PCT numéro WO 79/00717, de réaliser une mire en disposant, dans un quadrillage en rectangles, un dessin constitué par un motif en chevron et un (ou deux) motif horizontal. Les motifs en chevron peuvent être utilisés pour faire des mesures representatives d'une combinaison du défaut de convergence verticale et du défaut de convergence horizontale et les motifs horizontaux pour faire des mesures représentatives du défaut de convergence verticale; par un tel procédé de mesure, il serait possible, avec cette mire, de déterminer d'abord l'erreur de convergence verticale $\Delta V$ avec les mesures sur les motifs horizontaux puis, $\Delta V$ étant connu, de déterminer l'erreur de convergence horizontale $\Delta H$ à partir des mesures sur les motifs en chevron repré sentatives de $\Delta V$ et $\Delta H$ combinés. Mais une telle mire présenterait divers inconvénients pour la mise en oeuvre de ce procédé pour lequel elle n'est d'ailleurs pas conçue: il serait nécessaire d'effectuer une mise en mémoire pour constituer une colonne d'analyse des motifs horizontaux, de plus le chevron et la ou éventuellement les deux barres horizontales par rectangle constituent un dessin aux motifs surabondants ce qui limiterait la largeur maximale susceptible d'être donnée à chaque motif, or, comme il sera indiqué plus loin, il est important que les motifs soient larges dans le sens de leur analyse.

La présente demande de brevet a pour objet une mire optique permettant de déterminer la valeur à attribuer à ces signaux de correction de balayage horizontal et vertical.

Selon l'invention, cette mire optique comporte LN dessins élémentaires identiques, disposés chacun à l'intérieur de l'un des LN rectangles résultant du quadrillage de l'écran de la caméra en L groupes de M lignes chacun et en N colonnes, et constitués chacun par un motif vertical et un motif diagonal, larges dans le sens horizontal.

Les objets et caractéristiques de la présente invention apparaîtront plus clairement à la lecture de la description suivante d'un exemple de réalisation, ladite description étant faite en relation avec le dessinciannexé représentant une mire optique conforme à la présente invention.

A titre d'exemple, dans le cas d'une prise de vue à 625 lignes, la surface de l'écran est quadrillée suivant 13 colonnes (N = 13) et suivant14 groupes de 20 lignes chacun (L = 14 et M = 20). La mire optique comporte alors 13 x 14, soit 182, dessins élémentaires $1_{ln}$ disposés chacun dans l'un des rectangles résultant de ce quadrillage (1 variant de 1 à L et n variant de 1 à N).

Chaque dessin élémentaire $1_{ln}$ comporte un motif vertical 2 et un motif diagonal 3. Ces motifs sont de préférence de couleur blanche, sur fond noir.

Le motif vertical 2 est constitué par un rectangle dont les côtés sont disposés suivant les directions horizontale et verticale.

Le motif diagonal 3 est constitué par un paralleiogramme dont deux côtés sont disposés suivant une direction oblique, les deux autres côtés étant disposés suivant la direction horizontale.

La direction oblique peut avoir une inclinaison quelconque.

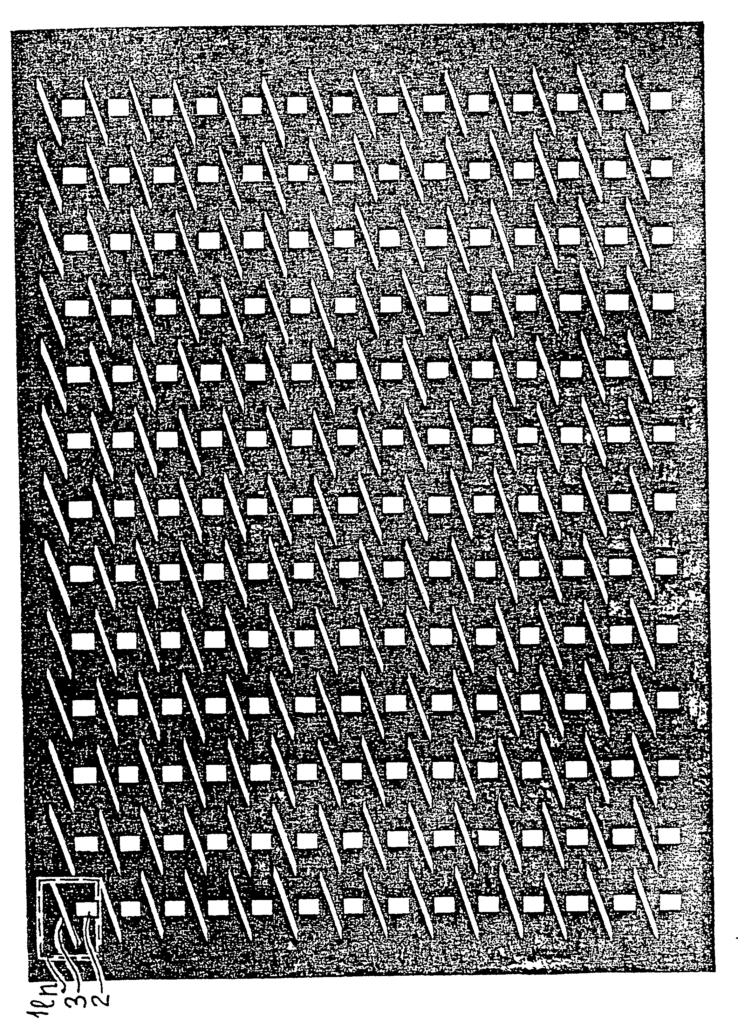

A titre d'exemple correspondant à l'illustration qui en est faite sur la figure, le motif diagonal est situé au dessus du motif vertical. 11 est néanmoins possible de positionner ces deux motifs l'un par rapport à l'autre de manière différente. Par exemple, le motif diagonal pourrait être au dessous, à droite ou à gauche du motif vertical, et vice versa.

Ces motifs ont une certaine hauteur, dans le sens vertical, en raison de la difficulté de faire coïncider une ligne de balayage avec un motif réduit à une ligne dans le sens horizontal. Ces motifs ont également une certaine largeur dans le sens horizontal. En effet, comme on le verra par la suite, ceci permet d'améliorer la convergence par la connaissance des défauts de convergence sur les fronts avant et arriere des signaux vidéo.

L'analyse s'effectue, en ligne, environ au centre de chaque motif du dessin. Pour chaque motif élémentaire, on mesure le déphasage $\Phi_1$entre les signaux vidéo obtenus pour deux des trois couleurs londamentales (1a troisieme servant de référence) lors de l'analyse de la transistion diagonale, et le dephasage $\Phi_2$ entre les mêmes signaux lors de l'analyse dela transistion verticale.

Le motif vertical n'est pas affecté par un défaut de convergence en vertical. 11 est représentatif d'un défaut de convergence en horizontal $\Delta H$ que l'on déduit directement de la mesure de $\Phi_2$.

Le motif diagonal est affecté par un défaut de convergence en horizontal et en vertical. L'erreur de phase $\Phi_1$ mesurée lors de l'analyse de ce motif permet de connaitre l'erreur de convergence en vertical $\Delta V$ à partir du moment

où on connait $\triangle$ H.

par une analyse en ligne de chaque dessin élémentaire, on peut donc connaitre les défauts de convergence en horizontal et en vertical dans chacune des régions de l'écran correspondant à la localisation des différents dessins élémentaires.

Le calcul est effectué en chaque point de mesure par exemple par un calculateur situé dans la partie électronique de la caméra.

Le dessin de cette mire peut également être utilisé pour la détermination des défauts de géométrie à l'aide d'une mire électronique, les déphasages $\Phi_1$ et $\Phi_2$ étant alors appréciés entre le signal vidéo correspondant à la couleur de référence, et la mire électronique.

Comme on l'a vu précédemment, les motifs ont une largeur suffisante pour pouvoir faire une mesure de déphasage sur les fronts avant et arrière des signaux vidéo. En effet, dans la pratique, on constate des différences dans le temps d'établissement, dans la bande passante et, dans le niveau des signaux vidéo relatifs aux trois couleurs. Ceci est sans importance lors d'un reglage de géométrie par rapport à la mire électronique, compte tenu de la précision demandée. Par contre, pour les défauts de convergence, ces effets peuvent conduire à des défauts visuels, bien qu'un réglage correct ait été effectué préalablement. C'est pourquoiune mesure de déphasage est faite aussi bien sur les fronts arriere que sur les fronts avant, la moyenne de ces deux mesures étant ensuite effectuée. Ceci permet de symétriser les erreurs résiduelles de convergence dues àla différence de caractéristiques des signaux vidéo considérés.

## Revendications

1. Mire optique pour la correction des défauts de convergence d'une caméra couleurs, caractérisée en ce qu'elle comporte LN dessins élémentaires ($1_{ln}$) identiques, disposés chacun à l'intérieur del'un des LN rectangles résultant d'un quadrillage de l'écran de la caméra en L groupes de M lignes chacun et en N colonnes, chacun des dessins élémentaires étant constitué par un motif vertical (2) et un motif diagonal (3), larges dans le sens horizontal.

2. Mire selon la revendication 1, caractérisée en ce que chaque motif vertical (2) est un rectangle dont les côtés sont disposés suivantles directions horizontale et verticale.

3. Mire selon l'une des revendications 1 et 2, caractérisée en ce que chaque motif diagonal (3) est un parallélogramme dont deux côtés sont disposés suivant la direction horizontale, les deux autres côtés étant disposés suivant une direction oblique.

4. Mire selon l'une des revendications 1 à 3, caractérisée en ce que les deux motifs, vertical (2) et diagonal (3) de chaque dessin élémentaire ($1_{ln}$) sont disposés l'un au dessus de l'autre, dans la direction verticale.

5. Mire selon l'une des revendications 1 à 3, caractérisée en ce que les deux motifs, vertical (2) et diagonal (3) de chaque dessin élémentaire ($1_{ln}$) sont disposés l'un à côté de l'autre, dans la direction horizontale.

## Patentansprüche

1. Optisches Testbild zur Korrektur von Konvergenzfehlern einer Farbkamera, dadurch gekennzeichnet, daß es LN gleiche elementare Muster ($1_{ln}$) enthält, die jeweils innerhalb eines der LN Rechtecke liegen, welche sich aus einer Rasterung des Bildes der Kamera in L-Gruppen zu jeweils M-Zeilen und N-Spalten ergeben, wobei jedes der elementaren Muster aus einem vertikalen Zeichen (2) und einem diagonalen Zeichen (3) gebildet ist, die in Horizontalrichtung breit sind.

2. Testbild nach Anspruch 1, dadurch gekennzeichnet, daß jedes senkrechte Zeichen (2) ein Rechteck ist, dessen Seiten in Horizontalrichtung und Vertikalrichtung liegen.

3. Testbild nach Anspruch 1 oder 2, dadurch gekennzeichnet, daß jedes diagonale Zeichen (3) ein Parallelogramm ist, wovon zwei Seiten in Horizontalrichtung liegen und die zwei anderen Seiten in Schrägrichtung liegen.

4. Testbild nach einem der Ansprüche 1 bis 3, dadurch gekennzeichnet, daß das senkrechte (2) und das diagonale (3) Zeichen jedes elementaren Musters ($1_{ln}$) in Vertikalrichtung übereinander angeordnet sind.

5. Testbild nach einem der Ansprüche 1 bis 3, dadurch gekennzeichnet, daß das vertikale (2) und das diagonale (3) Zeichen jedes elementaren Musters ($1_{ln}$) in waagerechter Richtung nebeneinander angeordnet sind.

## Claims

1. Optical test chart for the correction of convergence errors of a color camera, characterized in that it comprises LN identical elementary patterns ($1_{ln}$) each of which lies within one of the LN rectangles resulting from a grid type division of the camera frame into L groups of M lines each and of N columns, each of the elementary patterns being formed by a vertical sign (2) and a diagonal sign (3) which are wide in the horizontal direction.

2. Test chart according to claim 1, characterized in that each vertical sign (2) is a rectangle the sides of which are arranged in the horizontal and vertical directions.

3. Test chart according to any of claims 1 and 2, characterized in that each diagonal sign (3) is a parallelogram two sides of which are arranged in the horizontal direction and the two other sides of which are arranged in an oblique direction.

4. Test chart according to any of claims 1 to 3, characterized in that the two signs, vertical (2) and diagonal (3), of each elementary pattern ($1_{ln}$) are arranged one above another in the vertical direction.

5. Test chart according to any of claims 1 to 3, characterized in that the two signs, vertical (2) and diagonal (3), of each elementary pattern ($1_{ln}$) are arranged side by side in the horizontal direction.